# EUROPEAN PATENT SPECIFICATION

(11) **EP 4 367 909 B1**
(45) Date of publication and mention of the grant of the patent: **05.11.2025**
(21) Application number: 22733201.2
(22) Date of filing: 20.06.2022
(51) Int. Cl.: H04L 67/125, H04W 4/38, H04W 4/80

(54) **DEVICE DATA VALIDITY**
VORRICHTUNGSDATENGÜLTIGKEIT
VALIDITÉ DE DONNÉES DE DISPOSITIF

(30) Priority: 08.07.2021 GB 202109876
(43) Date of publication of application: 15.05.2024
(73) Proprietor: Vodafone Group Services Limited, Newbury RG14 2FN (GB)
(72) Inventor: HUNTER, Graham, London Greater London W2 6BY (GB); DHUGA, Malcolm, London Greater London W2 6BY (GB)
(74) Representative: Boult Wade Tennant LLP
(86) International application number: PCT/GB2022/051565
(87) International publication number: WO 2023/281240

(56) References cited:
- US-A1- 2020 059 769
- US-A1- 2021 144 079
- ZHU HAO ET AL: "Caching Transient Data for Internet of Things: A Deep Reinforcement Learning Approach", IEEE INTERNET OF THINGS JOURNAL, IEEE, USA, vol. 6, no. 2, 1 April 2019 (2019-04-01), pages 2074 - 2083, XP011723666, DOI: 10.1109/JIOT.2018.2882583

## Description

### Field of the Invention

The present invention relates to a system and method for retrieving and maintaining valid data from devices and in particular, from devices being managed remotely in a network.

### Background of the Invention

Large numbers of devices may be deployed to record and generate data. For example, utility companies may operate a large number of smart meters and these data need to be communicated to a central location. For such devices, it is in general important to be economical with system resources such as power usage, especially when the devices are battery powered and it is difficult or not feasible to replace the batteries.

Devices can be operated and managed by device management servers in order to coordinate the data communication to application servers and other entities.

WO 2015/036791 describes a system and method for managing devices more effectively by synchronising data from the devices with corresponding locations within a memory store. This enables the data to be available even when the devices are not in communication with a device manager.

However, some data types becomes less useful as the time increases from the last synchronisation.

US 2021/144079 describes a selective sensor polling system for a voice activated data packet based computer network environment.

US 2020/0059769 describes receiving a request from a communication module in a vehicle to communicate with an ant-sized radio device in the vehicle and provide sensor data to a module.

"Caching Transient Data for Internet of Things: A Deep Reinforcement Learning Approach" Zhu HAO et al, IEEE Internet of Things Journal, IEEE, USA, Vol. 6, No. 2, 1 April 2019, pages 2074-2083, DOI: 10.1109/JIOT.2018.2882583 describes transmitting loT data through wireless networks by caching loT data at a network edge.

Therefore, there is required a system and method that overcomes this problem.

### Summary of the Invention

Devices generate or record data values for particular attributes. For example, a device may have one or more sensors that generate values. The devices include one or more communications interfaces allowing them to send their data to a device manager or other receiving entity or server. In order to preserve bandwidth, power or other resources, the devices do not send their data all of the time but may do so according to a schedule or when prompted to do so (e.g. following a wake-up message being sent to them). A data store, database or other storage array maintains a copy of device values for each attribute. The stored values are updated (synchronised) whenever the values for particular attributes are received from the devices. Therefore, a copy or snapshot of the data are maintained that can be queried whenever a particular attribute value is required. The stored values represent the latest available values. As newer values are received then the older values are replaced in the memory store.

If a requested attribute value is determined to be too old or out of date (e.g. expired) then such a value may not be of use to a requester even though it is the latest available attribute value. Instead of providing the expired value, a newly received value of the attribute is provided in response to the request. There are several ways in which the new value is received. There may be by an immediate query sent to the device. For example, a wake-up message may be sent to the device in order to prompt it to return the attribute value (e.g. earlier than it would otherwise send the value). Therefore, attribute values do not need to be communicated unnecessarily, optimising system resource use (e.g. device battery power). Alternatively, the value may be returned the next time that the device is active or in communication with the device manager (e.g. a communications interface, such as a wireless interface, is powered). This may be at a time when another function is required that would not otherwise result in the particular attribute value from being returned (e.g. a heartbeat message, a status message, another attribute value being returned). This can be administered by the use of a queuing system with the device querying the queue whenever it wakes or is in active communication. Requested values are only returned by the device when an entry for that device (or group of devices) and attribute value is present on the queue. This further reduces system resource use but increases the time for responding to a query for a particular attribute value.

Against this background and in accordance with a first aspect there is provided a method for managing device data, as described in claim 1.

Preferably, if the value of the first attribute has not expired then the method may further comprise the step of retrieving from the memory store the stored value of the first attribute and providing the retrieved value of the first attribute in response to the request. In either case, a valid value of the attribute is usually or always provided (i.e. a value that is recent enough to be useful to the requester).

Optionally, receiving the value of the first attribute from the device may further comprise the steps of:
adding the request to a queue; and
the one or more devices receiving the request from the queue when the one or more devices is available to provide the value of the first attribute. For example, a MQTT queue or similar may be used. The devices may subscribe to such a queue and respond with the requested value when a message is present.

Optionally, the device may have a first state where it is unable to provide the value of the first attribute and a second state where it is able to provide the value of the first attribute. The device may have different states in order to limit the use of system resources under particular circumstances.

Advantageously, the step of receiving the value of the first attribute from the device may further comprise the steps of:
sending a message to the device; and
in response to the message, the device changing from the first state to the second state. For example, the message may be a wake-up message or have the effect of waking up the device (e.g. prompting the device to enable one or more dormant functions, interfaces or higher performance components).

Optionally, the message may be sent to the device over a first communications channel and the value of the first attribute is received from the device over a second communications channel different to the first communications channel. For example, the first communications channel may require less power or system resources or be optimised for intermittent communications, whereas the second communications channel may be more optimised for sending data (e.g. more securely or more reliably).

Preferably, the first state may be a low power state and the second state may a high power state with the device drawing a higher power than when in the low power state. This preserves power and can extend the life of the device, especially when battery powered.

Optionally, the synchronisation of the one or more values between the attributes stored in the memory store and the corresponding attributes associated with the devices may be maintained at intervals and the first attribute has a first synchronisation interval. The synchronisation may also be carried out whenever the device or devices are available and in communication, which may or may not be at regular intervals or at predetermined times.

Optionally, the device attributes may further comprise a second attribute, the second attribute having a second synchronisation interval shorter than the first synchronisation interval, and further wherein the step of receiving the value of the first attribute when the value of the first attribute has expired further may comprise the steps of:
at the time of a synchronisation for the second attribute, receiving the value of the first attribute and the value of the second attribute and providing the value of the first attribute in response to the request. Some attribute values may not be required as often as others. For example, a battery voltage or remaining capacity may not be required as often as a value measured by a sensor on a device (e.g. monthly compared to daily). Such a differentiation can therefore make better use of system and device resources like bandwidth and battery usage. These intervals may be set in advance and selected by users of the system. However, on occasion, the attribute value that is updated and synchronised with the memory store less often may become more important and temporarily have a shorter validity period than its synchronisation interval. Shortening the synchronisation period will use more system resources and may not be necessary most of the time. Manually adjusting a schedule of synchronisation may be unfeasible or create additional complexities, especially for large networks of devices. Waking up the device immediately may also not be necessary for some attribute values. Therefore, a more efficient compromise is to wait until another synchronisation for a different attribute value is carried out for a particular device or group of devices. This avoids having to power up a communications interface on the device more than usual as both (or a greater number) of attribute values may be sent at once every now and again. In some example implementations, a similar queuing mechanism may be used to trigger this scenario.

Preferably, the first attribute may have an expiry time or duration and the step of determining if the value of the first attribute has expired comprises comparing the expiry time or duration with a time period since the value was synchronised and/or stored in the memory store. Such a time may be stored as a timestamp or the value may be associated with a record time at the device that send the attribute value, for example. The expiry time or duration may also be stored with the attribute value (or otherwise associated with it in a data store). However, it may be preferable for the expiry time, duration or other indication of a validity period to be received with the request for the attribute value. For example, this may be an absolute time (e.g. three days and six hours) or as a specific time and date (e.g. 13:00 on 23/06/2021 or numerical equivalent). Receiving such an indication with the request has the advantage of increased flexibility because different requests (even if received at the same or similar times) can result in the same attribute value being considered as unexpired for one request (resulting in the stored attribute value being returned) or as expired for another request (and so prompting a fresh acquisition or synchronisation of the attribute value). Therefore, the freshness of attribute value can be changed for different uses. Of course, if a request for an attribute value indicates that the stored value has expired then the stored value can be replaced with the more recent value, when it is acquired and subsequently synchronised.

Optionally, the expiry time or duration may be determined from information received with the request for the value of the first attribute. Therefore, different requesters may have different validity time requirements or the same requester can vary such validity parameters and times more easily.

Optionally, the request may associated with a particular device of the one or more devices. Furthermore, groups or sets of devices may be queried or the attribute values from all devices may be queried at the same time.

Optionally, the request may include data indicating an expiration time of the requested value. This may be a code or flag that indicates a particular period (e.g. 2 hours, 3 days, etc.), an absolute time or time code (e.g. 202106241300) or a number of seconds, minutes and/or hours or other indication.

Preferably, the step of determining if the value of the first attribute has expired further comprises determining if the current time is not earlier than the expiration time of the requested value. The expiration time may be taken directly from the request or a further step may be to calculate the expiration time using the data within the request. There can be other ways to determine if the requested value has expired including but not limited to determining if the current time or the time of the request falls before the time that the data was acquired or stored and a time calculated by adding a length of time indicated in the request to that acquisition time, for example. If the current time is out of this range then the stored attribute value has expired.

According to a second aspect, there is provided a system, as described in claim 11. The first attribute value may have an expiry time or duration. This may be predetermined, set for all attributes or particular types or groups of attributes, be variable and/or received along with the request for the value of the attribute (or may be inferred or decoded from information included in the request).

Optionally, the synchroniser may be further configured to synchronise the one or more values between the attributes stored in the memory store and the corresponding attributes associated with the devices at intervals and the first attribute has a first synchronisation interval, the device attributes further comprise a second attribute, the second attribute having a second synchronisation interval shorter than the first synchronisation interval, and wherein the device manager is further configured to:
at the time of a synchronisation for the second attribute, receive the value of the first attribute and the value of the second attribute and providing the value of the first attribute in response to the request.

According to a third aspect, there is provided a method for managing device data comprising the steps of:
receiving from one or more devices values of a plurality of attributes;
storing the attribute values of the plurality of attributes associated with the one or more devices in a memory store;
maintaining synchronisation of the values at intervals between the attributes stored in the memory store and the corresponding attributes associated with the devices, wherein the device attributes comprise at least a first attribute and a second attribute, the first attribute having a first synchronisation interval and the second attribute having a second synchronisation interval shorter than the first synchronisation interval;
receiving a request for the value of the first attribute;
determining if the value of the first attribute has expired (e.g. according to any of the previously described procedures); and
if the stored value of the first attribute has expired then at the time of the next synchronisation for the second attribute, receiving the value of the first attribute and the value of the second attribute from the device and providing the value of the first attribute in response to the request. At least the first attribute value may have an expiry time or duration. This may be predetermined, set for all attributes or particular types or groups of attributes, be variable and/or received along with the request for the value of the attribute (or may be inferred or decoded from information included in the request).

Preferably, if the stored value of the first attribute has not expired then the method may further comprise the step of retrieving from the memory store the stored value of the first attribute and providing the retrieved value of the first attribute in response to the request.

Optionally, the request may be associated with a particular device of the one or more devices.

Advantageously, if the stored value of the first attribute has expired then the value of the first attribute may be received by:
adding a request for the value of the first attribute to a queue, wherein the request is associated with the device;
retrieving the request from the queue when the first attribute is synchronised between the particular device and the memory store.

The methods described above may be implemented as a computer program comprising program instructions to operate a computer. The computer program may be stored on a computer-readable medium.

The computer system may include a processor or processors (e.g. local, virtual or cloud-based) such as a Central Processing unit (CPU), and/or a single or a collection of Graphics Processing Units (GPUs). The processor may execute logic in the form of a software program. The computer system may include a memory including volatile and nonvolatile storage medium. A computer-readable medium may be included to store the logic or program instructions. The different parts of the system may be connected using a network (e.g. wireless networks and wired networks). The computer system may include one or more interfaces. The computer system may contain a suitable operating system such as UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a sequence diagram of a method for obtaining device data;
FIG. 2 shows a schematic diagram of a system for obtaining device data;
FIG. 3 shows a flow chart of a method for obtaining device data;
FIG. 4 shows a sequence diagram of a further example method for obtaining device data; and
FIG. 5 shows a flow chart of a further example method for obtaining device data.

It should be noted that the figures are illustrated for simplicity and are not necessarily drawn to scale. Like features are provided with the same reference numerals.

### Detailed description of the preferred embodiments

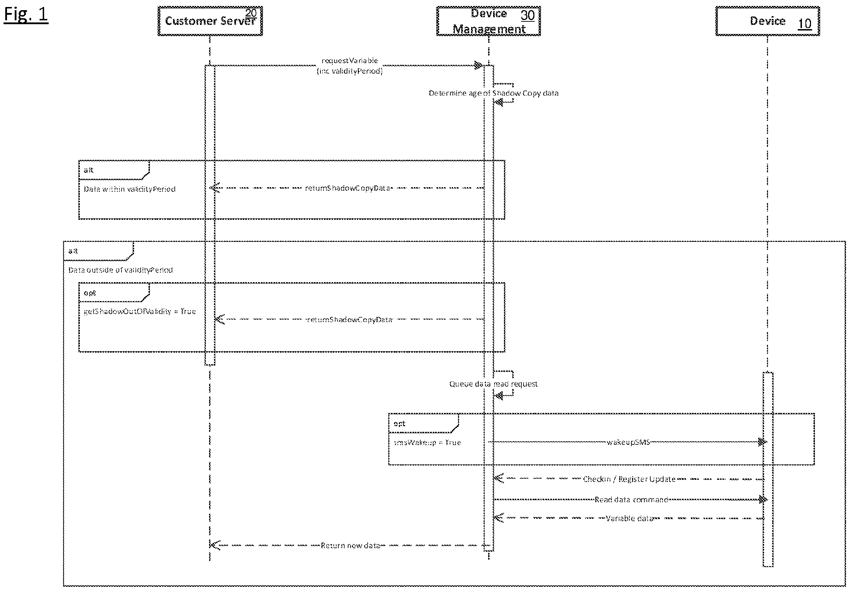

Figure 1 shows a sequence diagram describing the steps of an example method for obtaining up to date and valid attribute values originating at, detected by or collected by one or more devices 10. In this example, a customer server 20 requests a value (variable) from a device management server 30. The device management server 30 includes a memory store or database (not shown in this figure) storing a copy of attribute values that were received from the one or more devices 10. The device management server 30 includes a synchronisation component (not shown in this figure) that maintains synchronisation between the attribute values derived or received from the devices 10 and the attribute values stored in the memory store (indicated as a shadow copy of data in this figure).

The request from the customer server 20 includes a validity period or time for the particular requested attribute value. This information defines the oldest acceptable value (the values may change over time or be an instantaneous sensor reading, for example). The device management server 30 checks if the copy of the value that it has previously stored has expired or is older than the validity period indicated in the request. The upper box of the sequence diagram shows the device management server 30 returning the attribute value in response to the request when the stored copy of the value has not expired or is still within the requested validity period. The lower box in Figure 1 shows the steps that are taken when the stored copy of the attribute value has already expired and is outside of the requested validity period. In this example implementation, an entry is added to a queue to read or otherwise receive a fresh attribute value from the device 10. Optionally, a wakeup message (e.g. sent using SMS) is sent to wake up a particular device or devices 10 so that they can provide a latest or current version of the attribute value. Alternatively, the attribute value is provided by the device 10 when it is next in communication with the device management server 30. In either case, the queued data request is read by the device 10, which prompts the device 10 to provide the variable data or attribute value to the device management server 30. This clears the queue entry or marks it as completed. This recently read value is provided to the customer server 20 in order to complete the request, preferably as soon as it is received from the device 10.

A further optional step may be to return the out of date value in addition to the customer server 20. The response may indicate which value is current or within the validity period and which value has expired. Therefore, the customer server 20 can optionally receive both the stored value that is out of date or expired as well as the current value or at least a more recent value, from the device or devices 10.

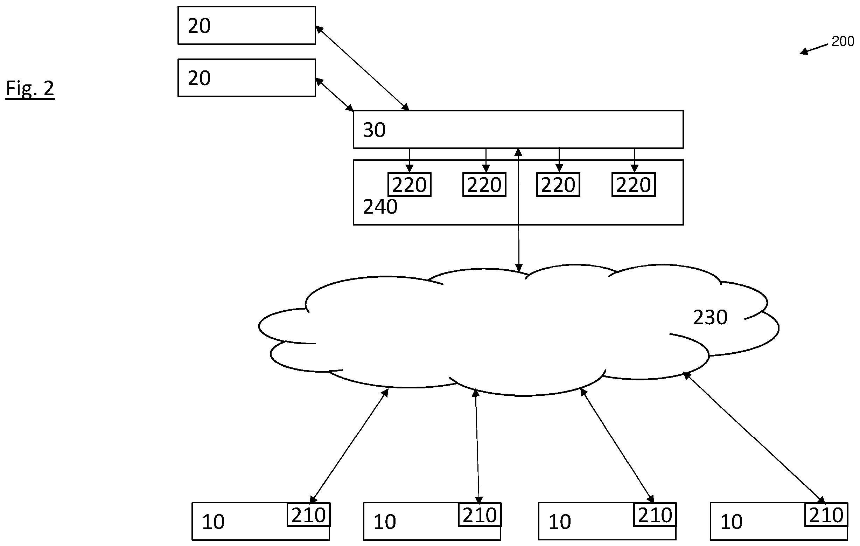

Figure 2 shows a schematic diagram of a system 200 for implementing the method described with reference to Figure 1. This figure is shown at a high level and not all components are included in the figure.

In this figure, four devices 10 are shown. However, any number may be included and typically this would include many thousands of devices 10. Each device includes at least one communications interface 210 that enables the device 10 to communicate with the device management server 30. This may be accomplished through a wide area network (WAN) 230 that can include a telecommunications network or the internet, for example. Any suitable communications protocols and channels may be used to communicate with the devices 10, including those described in WO 2015/036791.

The synchronised attribute values are stored within a database 240 in communication with the device management server 30. Individual copies of values 220 are stored, updated and deleted within the database 240, as necessary. The database may be separate from the device management server 30 or incorporated within it. Figure 2 shows two separate customer servers 20 that may issue their requests for attribute values and receive these values as a response. Any number of customer servers 20 may be present in the system and separately provided with values. The values that are returned may be retrieved from the database 240 or directly from the devices 10, depending on whether or not they have expired within the database.

Each device may include a further interface (not shown in this Figure) for receiving a wakeup message (e.g. SMS). The wakeup message may be sent over a different communications channel to that of the request and response (i.e. data).

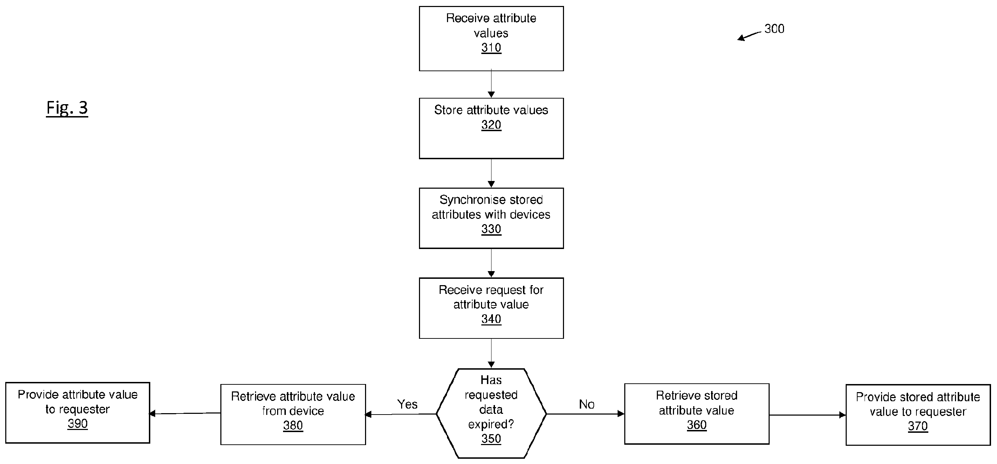

Figure 3 shows a flowchart of a method 300 based on the method described with reference to Figure 1. Again, the steps are simplified with not every action is shown in this figure. At step 310, attribute values are received from devices 10 and these are stored in the memory store or database 240 at step 320. These values are synchronised between the memory store or database 240 and attribute values generated or provided by the devices 10 at step 330.

At step 340, a request for a particular attribute value or values originating at one or more devices 10 is received. The device manager server 30 determines whether or not the requested data has a value that has expired within its database or memory store 240. This determination is made at step 350. If the value has not expired and remains valid and if it has not already done so, the value is retrieved at step 360. The attribute value is provided to the requestor at step 370.

When the stored value has expired or does not otherwise meet the validity requirements in the request then at step 380, the attribute value is received from the device, either immediately or at the next opportunity at step 380. This attribute value is returned to the requestor at step 390. The requirements may also include other factors as well as expiry time.

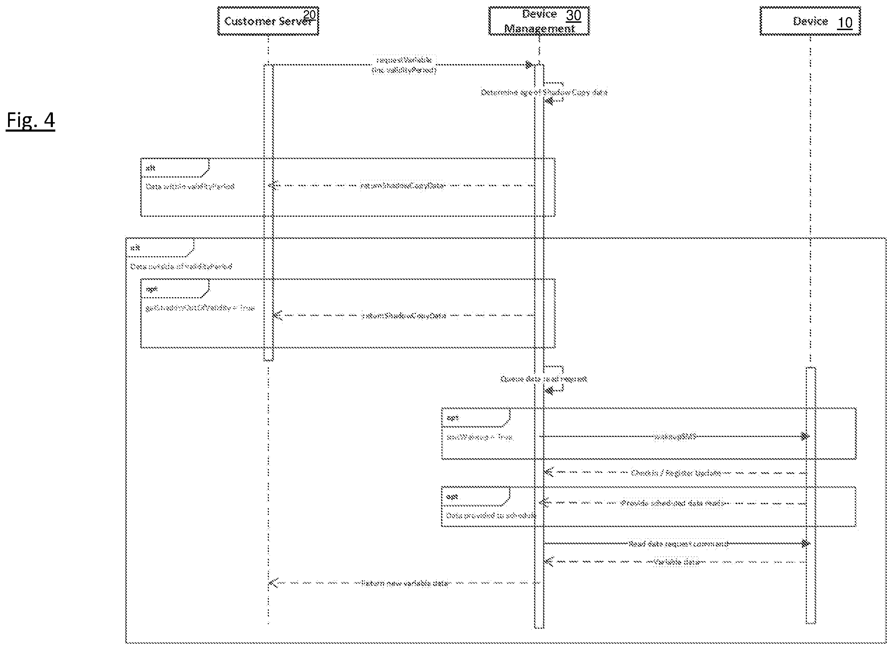

Figure 4 shows a sequence diagram of a further example implementation of the method to provide and manage device data. The steps that are identical to those already described with respect to Figure 1 shall not be repeated. This figure shows an additional optional step in which the device or devices 10 provide more than one attribute value. These may be provided at different synchronisation intervals. In an example where two attribute values are being provided at two separate and different intervals, one attribute value is synchronised more often than another. If the customer server 20 requests the attribute value that is synchronised less often and the copy of this attribute value stored within the memory store 240 is invalid or has expired (e.g. it was not acquired within the requested validity period) then a request for this value is added to the queue in a similar way to that described with reference to Figure 1. When the device 10 is involved in a synchronisation event for the other (or another) attribute value (i.e. according to its more frequent synchronisation schedule), then at the same time, the requested value is provided (device or devices 10 may read the request from the queue prompting them to return additional data or values). Therefore, both attribute values are provided at the same time even though the synchronisation schedule for the lower frequency synchronisation would not otherwise occur. Of course, if synchronisation of the requested attribute value happened to have occurred before the more frequent synchronisation takes place then only that value needs to be provided but this will be a rarer occurrence (depending on the difference in synchronisation frequencies).

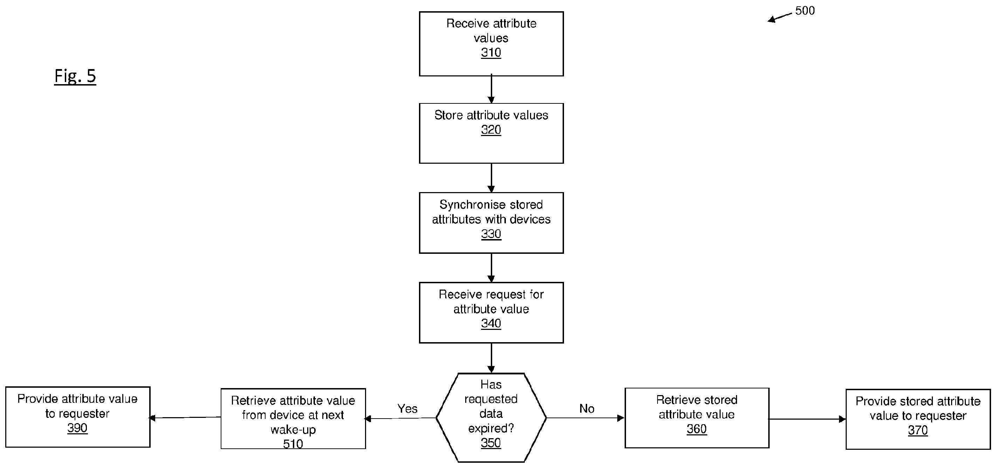

Figure 5 shows a further example method 500 for providing attribute values from devices. Again, a description of the same steps of the method 300 described with reference to Figure 3, will not be repeated. These common steps have the same reference numerals. The different step 510 occurs within the branch of the method 500 that takes place when the requested data has expired (checked at step 350). In this case, the attribute value is retrieved from the device 10 at the time that the device next wakes up. The device 10 may wake up because it has received a wakeup message (e.g. via SMS) or because it is providing a different attribute value that is being synchronised more often than the requested attribute value.

This provides a more efficient system and method because the various interfaces 210 in a device 10 are only being utilised when they were scheduled to do so and this can prolong the system resources such as battery charge and reduce unnecessary bandwidth usage as well.

The following describes further example implementations of the system and method for managing device data. Customer application servers 20 communicate with devices 10 in the field, of which there may be a very large number. For example, utilities companies operate a large number of smart meters in people's homes. These smart meters generate attribute values, such the amount of used resource. With such devices 10, it is generally important to be very economical with power usage. The devices may use the LWM2M protocol to transmit the attribute data securely over wireless communication channels.

Device management (DM) platforms (DMP) facilitate the operation of customer application servers (AS) 20 and devices 10. In other words, the AS 20 communicates with the devices 10 via the DMP. The DMP communicates with the devices 10 and the AS 20. The DMP (e.g. through its server or servers 30) can receive data from the devices 10 and queue commands to the devices 10 when data or actions are required, for example. The DMP maintains a 'shadow copy' of device parameters, which is available to the AS 20 when needed. This minimises power consumption by the device 10, since power is consumed only when the device 10 periodically transmits data.

The DMP therefore allows the AS 20 to interact with the DMP via a single set of integrated application programming interfaces (APIs) or other interfaces, rather than directly with each device 20.

WO 2015/036791 describes in detail how to synchronise the attribute values with the memory store 240 as well as how the attribute values are transmitted to the device manager server 30 from the devices 10 in a secure manner. The synchroniser may synchronise the attribute values at intervals, which may be defined by a schedule (e.g. contact device A at time X, device B at time Y, etc.) or at a particular time interval (e.g. every X minutes). The interval or specified times may be pre-determined or dynamically set based on other criteria. Certain groups of devices (e.g. heart monitors) may then be synchronised more often than others.

Timeliness rules may indicate the criticality of a data item and how frequently the Device Manager 30 should attempt to update the information; e.g. meter readings from a power meter where at least one meter reading is required in a 24 hour period. Timeliness meta-data attributes allows connectivity systems to operate in concert with the physical devices, to automate the data collection activities and for optimisation (e.g. operating during times of low cellular activity).

The DMP determines whether the shadow copy of data associated with a particular device is relatively new and up-to-date, or outdated and expired. If the data is outdated or expired, then the DMP queues a command to the device 10 and requests the device 10 to transmit current data to the DMP. This is achieved by setting a threshold period for using a particular set of shadow data, after which the DMP requests up to date data from the device, to update the shadow data and/or send requested data to the AS 20. An advantage of this approach is to reduce the burden of computation of the AS 20, since some computation is shifted to the DMP.

With reference to figure 4, the "asyncReadVariables" API retrieve variables from a device 10, or previously read variables which are held in a shadow copy (the shadow copy is the platform held view of a device 10, based on the last information received from it). If the variable data exists in the device shadow, and is within the specified "Validity Period", then that value will be returned. If validatiyPeriod is specified than device shadow value will only be returned if the data is not older than validity period requested. For example, AS 20 may request "METER_COUNTER" variable read with validatiyPeriod of two hours. This will only return a device shadow value if the value is less than two hours old (in this example). If the value is older than two hours than a "read variable" request will be queued.

For data that is not available, or is older than the "Validity Period", a read request will be queued waiting for the device to connect to the Device Management Platform to provide the current variable value. If required, an attempt can be made to "wake up" the device by using SMS functionality or another direct communications channel, to prompt the device to supply the data more quickly (i.e. change from a low power state where the communications interface 210 is not in operation to a high power state when it is).

Variables reads from either the device shadow or the device 10 (depending on the validity test) are returned asynchronously via an outbound notification API readVariableNotification.

Setting getShadowOutOfValidity to true will return the device shadow value, even if the value is older than the validatiyPeriod, and the "read variable" request is also queued.

The following provides an example implementation. An engineer has an upcoming engineer visit to provide some maintenance to an installed water meter. In advance, the engineer wants to know whether or not the battery needs replacing. To conserve power, the meter is configured to only provide its battery level once a month, but it will be a couple of weeks until it next provides updated battery information (according to the synchronisation schedule for this attribute value and device combination). The engineer logs into a platform and asks for the battery level. The engineer's platform requests the battery level from the device manager server 30, specifying seven days as the validity period. The device manager server 30 (via a platform interface) determines that the battery level reading currently stored within memory store 240 is outside of the validity period and so queues a read of the battery level onto the meter's command queue.

The water meter is scheduled to check-in with the device manager server 30 daily to provide the water usage/metering data. When it does so, it is informed that it must also provide an update-to-date battery reading, which it does (e.g. by reading the request from the queue). The new battery level information is then forwarded to the Engineer's platform, so that they have full understanding of the device's current status and what parts are required for his visit.

Further benefits include:
1) Devices 10 can be configured to provide intermittently required data to longer scheduled intervals, but if more recent information is required mid-schedule, then the platform will obtain this. This helps save radio transmissions, data usage and battery life.
2) The customer is saved the hassle of modifying variable read schedules if they need more update-to-date information. This helps save user time and the risk of unnecessary data/battery usage if the schedule is not changed back quickly.

As will be appreciated by the skilled person, details of the above embodiment may be varied without departing from the scope of the present invention, as defined by the appended claims.

For example, expiry of particular attribute values may be set by attribute type (e.g. associated within the memory store as further data field), for particular devices or sets of devices, or predetermined and stored at the device manager. The queue may take different forms and may be managed by a queue manager as a separate entity or server. The data may be transmitted using LWM2M or other secure protocol. The optional steps may be triggered by the request from the customer server or defined by other logic.

There may be one attribute value or two attribute values having different synchronisation schedules or intervals. Furthermore, there may be more than two attribute values have different (or the same) synchronisation schedules or intervals. When an up to date attribute value is requested then at the next synchronisation (for any value), then the requested value may additionally be returned. Other non-requested values may also be returned at the same time to update the stored values in case these are subsequently requested.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method for managing device data comprising the steps of:
receiving (310) from one or more devices (10) values of one or more attributes;
storing (320) the values of the one or more attributes associated with the one or more devices in a memory store;
maintaining synchronisation (330) of the one or more values between the attributes stored in the memory store and the corresponding attributes associated with the devices, wherein the device attributes comprise at least a first attribute;
receiving (340) a request for the value of the first attribute of a first device;
determining (350) if the value of the first attribute has expired; and if the stored value of the first attribute has expired then receiving (380) the value of the first attribute from the first device and providing (390) the received value of the first attribute in response to the request, wherein the synchronisation of the one or more values between the attributes stored in the memory store and the corresponding attributes associated with the devices is maintained at intervals and the first attribute has a first synchronisation interval, and further wherein the device attributes further comprise a second attribute of the first device, the second attribute having a second synchronisation interval shorter than the first synchronisation interval, and further wherein the step of receiving the value of the first attribute when the value of the first attribute has expired further comprises the steps of:
at the time of a synchronisation for the second attribute, receiving the value of the first attribute of the first device and the value of the second attribute of the first device and providing the value of the first attribute in response to the request,
wherein receiving the value of the first attribute from the first device further comprises the steps of:
adding the request to a queue; and
the first device receiving the request from the queue when the first device is available to provide the value of the first attribute.

2. The method of claim 1, wherein if the value of the first attribute has not expired then retrieving from the memory store the stored value of the first attribute and providing the retrieved value of the first attribute in response to the request.

3. The method of claim 1, wherein the first device has a first state where it is unable to provide the value of the first attribute and a second state where it is able to provide the value of the first attribute.

4. The method of claim 3, wherein receiving the value of the first attribute from the first device further comprises the steps of:
sending a message to the first device; and
in response to the message, the first device changing from the first state to the second state.

5. The method of claim 4, wherein the message is sent to the first device over a first communications channel and the value of the first attribute is received from the first device over a second communications channel different to the first communications channel.

6. The method according to any one of claims 3 to 5, wherein the first state is a low power state and the second state is a high power state with the first device drawing a higher power than when in the low power state.

7. The method according to any previous claim, wherein the first attribute has an expiry time or duration and the step of determining if the value of the first attribute has expired comprises comparing the expiry time or duration with a time period since the value was synchronised and/or stored in the memory store.

8. The method of claim 7, wherein the expiry time or duration is determined from information received with the request for the value of the first attribute.

9. The method according to any previous claim, wherein the request includes data indicating an expiration time of the requested value.

10. The method of claim 9, wherein the step of determining if the value of the first attribute has expired further comprises determining if the current time is not earlier than the expiration time of the requested value.

11. A system comprising:
a memory store having memory locations, wherein each memory location stores values of one or more attributes associated with one or more devices;
a synchroniser configured to maintain synchronisation of the one or more values at intervals between the attributes stored in the memory store and the corresponding attributes associated with the devices, wherein the device attributes comprise at least a first attribute, the first attribute having a first synchronisation interval; and
a device manager (30) configured to:
receive (310) a request for the value of the first attribute of a first device, and if the stored value of the first attribute has expired then receiving (380) the value of the first attribute from the first device and providing (390) the received value of the first attribute in response to the request, wherein the device attributes further comprise a second attribute of the first device, the second attribute having a second synchronisation interval shorter than the first synchronisation interval, and further wherein the step of receiving the value of the first attribute when the value of the first attribute has expired further comprises the steps of:
at the time of a synchronisation for the second attribute, receiving the value of the first attribute of the first device and the value of the second attribute of the first device and providing the value of the first attribute in response to the request,
wherein receiving the value of the first attribute from the first device further comprises the steps of:
adding the request to a queue; and
the first device receiving the request from the queue when the first device is available to provide the value of the first attribute.

12. The system of claim 11, wherein the request includes data indicating an expiration time of the requested value and the device manager is further configured to determine if the value of the first attribute has expired by determining if the current time is not earlier than the expiration time of the requested value.

13. A computer program comprising instructions which, when the program is executed by a computer, cause the computer to carry out the method according to any of claims 1 to 10.

## Patentansprüche

1. Verfahren zum Verwalten von Vorrichtungsdaten umfassend die Schritte von:
Empfangen (310), von einer oder mehreren Vorrichtungen (10), von Werten eines oder mehrerer Attribute;
Speichern (320) der Werte des einen oder der mehreren Attribute, die der einen oder den mehreren Vorrichtungen zugeordnet sind, in einem Speicher;
Aufrechterhalten der Synchronisierung (330) des einen oder der mehreren Werte zwischen den in dem Speicher gespeicherten Attributen und den entsprechenden Attributen, die den Vorrichtungen zugeordnet sind, wobei die Vorrichtungsattribute mindestens ein erstes Attribut umfassen;
Empfangen (340) einer Anfrage bezüglich des Werts des ersten Attributs einer ersten Vorrichtung;
Bestimmen (350), ob der Wert des ersten Attributs abgelaufen ist; und
wenn der gespeicherte Wert des ersten Attributs abgelaufen ist, dann Empfangen (380) des Werts des ersten Attributs von der ersten Vorrichtung und Bereitstellen (390) des empfangenen Werts des ersten Attributs als Antwort auf die Anfrage, wobei die Synchronisierung des einen oder der mehreren Werte zwischen den in dem Speicher gespeicherten Attributen und den entsprechenden Attributen, die den Vorrichtungen zugeordnet sind, in Intervallen aufrechterhalten wird und das erste Attribut ein erstes Synchronisierungsintervall aufweist und ferner wobei die Vorrichtungsattribute ferner ein zweites Attribut der ersten Vorrichtung umfassen, wobei das zweite Attribut ein Synchronisierungsintervall aufweist, das kürzer als das erste Synchronisierungsintervall ist, und wobei ferner der Schritt des Empfangens des Werts des ersten Attributs, wenn der Wert des ersten Attributs abgelaufen ist, ferner die Schritte umfasst von:
zum Zeitpunkt der Synchronisierung für das zweite Attribut, Empfangen des Werts des ersten Attributs der ersten Vorrichtung und des Werts des zweiten Attributs der ersten Vorrichtung und Bereitstellen des Werts des ersten Attributs als Antwort auf die Anfrage,
wobei das Empfangen des Werts des ersten Attributs von der ersten Vorrichtung ferner die Schritte umfasst von:
Hinzufügen der Anfrage zu einer Warteschlange; und
Empfangen, durch die erste Vorrichtung, der Anfrage aus der Warteschlange, wenn die erste Vorrichtung verfügbar ist, um den Wert des ersten Attributs bereitzustellen.

2. Verfahren nach Anspruch 1, wobei, wenn der Wert des ersten Attributs nicht abgelaufen ist, der gespeicherte Wert des ersten Attributs aus dem Speicher abgerufen wird und der abgerufene Wert des ersten Attributs als Antwort auf die Anfrage bereitgestellt wird.

3. Verfahren nach Anspruch 1, wobei die erste Vorrichtung einen ersten Status aufweist, in dem sie den Wert des ersten Attributs nicht bereitstellen kann, und einen zweiten Status, in dem sie den Wert des ersten Attributs bereitstellen kann.

4. Verfahren nach Anspruch 3, wobei das Empfangen des Werts des ersten Attributs von der ersten Vorrichtung ferner die Schritte umfasst von:
Senden einer Nachricht an die erste Vorrichtung; und
als Antwort auf die Nachricht, Wechseln, durch die erste Vorrichtung, von dem ersten Status in den zweiten Status.

5. Verfahren nach Anspruch 4, wobei die Nachricht über einen ersten Kommunikationskanal an die erste Vorrichtung gesendet wird und der Wert des ersten Attributs über einen zweiten Kommunikationskanal, der sich von dem ersten Kommunikationskanal unterscheidet, von der ersten Vorrichtung empfangen wird.

6. Verfahren nach einem der Ansprüche 3 bis 5, wobei der erste Status ein Energiesparmodus und der zweite Status ein Modus mit hoher Leistung ist, bei dem die erste Vorrichtung mehr Leistung als im Energiesparmodus nutzt.

7. Verfahren nach einem vorstehenden Anspruch, wobei das erste Attribut eine Ablaufzeit oder -dauer aufweist und der Schritt des Bestimmens, ob der Wert des ersten Attributs abgelaufen ist, umfasst, dass die Ablaufzeit oder -dauer mit einem Zeitraum seit der Synchronisierung und/oder Speicherung des Werts im Speicher verglichen wird.

8. Verfahren nach Anspruch 7, wobei die Ablaufzeit oder -dauer auf Basis von Informationen bestimmt wird, die mit der Anfrage bezüglich des Werts des ersten Attributs empfangen werden.

9. Verfahren nach einem vorstehenden Anspruch, wobei die Anfrage Daten beinhaltet, die eine Ablaufzeit des angeforderten Werts angeben.

10. Verfahren nach Anspruch 9, wobei der Schritt des Bestimmens, ob der Wert des ersten Attributs abgelaufen ist, ferner das Bestimmen umfasst, ob die aktuelle Zeit nicht vor der Ablaufzeit des angeforderten Werts liegt.

11. System, umfassend:
einen Speicher mit Speicherorten, wobei jeder Speicherort Werte eines oder mehrerer Attribute speichert, die einer oder mehreren Vorrichtungen zugeordnet sind;
eine Synchronisierungsvorrichtung, konfiguriert zum Aufrechterhalten der Synchronisierung, in Intervallen, des einen oder der mehreren Werte zwischen den in dem Speicher gespeicherten Attributen und den entsprechenden Attributen, die den Vorrichtungen zugeordnet sind, wobei die Vorrichtungsattribute mindestens ein erstes Attribut umfassen, wobei das erste Attribut ein erstes Synchronisierungsintervall aufweist; und
eine Vorrichtungsverwaltungseinheit (30), konfiguriert zum:
Empfangen (310) einer Anfrage bezüglich des Werts des ersten Attributs einer ersten Vorrichtung, und
wenn der gespeicherte Wert des ersten Attributs abgelaufen ist, dann Empfangen (380) des Werts des ersten Attributs von der ersten Vorrichtung und Bereitstellen (390) des empfangenen Werts des ersten Attributs als Antwort auf die Anfrage, wobei die Vorrichtungsattribute ferner ein zweites Attribut der ersten Vorrichtung umfassen, wobei das zweite Attribut ein zweites Synchronisierungsintervall aufweist, das kürzer als das erste Synchronisierungsintervall ist, und wobei ferner der Schritt des Empfangens des Werts des ersten Attributs, wenn der Wert des ersten Attributs abgelaufen ist, ferner die Schritte umfasst von:
zum Zeitpunkt der Synchronisierung für das zweite Attribut, Empfangen des Werts des ersten Attributs der ersten Vorrichtung und des Werts des zweiten Attributs der ersten Vorrichtung und Bereitstellen des Werts des ersten Attributs als Antwort auf die Anfrage,
wobei das Empfangen des Werts des ersten Attributs von der ersten Vorrichtung ferner die Schritte umfasst von:
Hinzufügen der Anfrage zu einer Warteschlange; und
Empfangen, durch die erste Vorrichtung, der Anfrage aus der Warteschlange, wenn die erste Vorrichtung verfügbar ist, um den Wert des ersten Attributs bereitzustellen.

12. System nach Anspruch 11, wobei die Anfrage Daten beinhaltet, die eine Ablaufzeit des angeforderten Werts angeben und wobei die Vorrichtungsverwaltungseinheit ferner konfiguriert ist zum Bestimmen, ob der Wert des ersten Attributs abgelaufen ist, indem bestimmt wird, ob die aktuelle Zeit nicht vor der Ablaufzeit des angeforderten Werts liegt.

13. Computerprogramm umfassend Anweisungen, die bei Ausführung des Programms durch einen Computer veranlassen, dass der Computer das Verfahren nach einem der Ansprüche 1 bis 10 ausführt.

## Revendications

1. Procédé de gestion de données de dispositif comprenant les étapes consistant à :
recevoir (310) à partir d'un ou de plusieurs dispositifs (10) des valeurs d'un ou de plusieurs attributs ;
stocker (320) les valeurs des un ou plusieurs attributs associés aux un ou plusieurs dispositifs dans une banque de mémoire ;
maintenir une synchronisation (330) des une ou plusieurs valeurs entre les attributs stockés dans la banque de mémoire et les attributs correspondants associés aux dispositifs, dans lequel les attributs de dispositif comprennent au moins un premier attribut ;
recevoir (340) une demande de la valeur du premier attribut d'un premier dispositif ;
déterminer (350) si la valeur du premier attribut a expiré ; et
si la valeur stockée du premier attribut a expiré, alors recevoir (380) la valeur du premier attribut à partir du premier dispositif et fournir (390) la valeur reçue du premier attribut en réponse à la demande, dans lequel la synchronisation des une ou plusieurs valeurs entre les attributs stockés dans la banque de mémoire et les attributs correspondants associés aux dispositifs est maintenue à des intervalles et le premier attribut a un premier intervalle de synchronisation, et en outre dans lequel les attributs de dispositif comprennent en outre un deuxième attribut du premier dispositif, le deuxième attribut ayant un deuxième intervalle de synchronisation plus court que le premier intervalle de synchronisation, et en outre dans lequel l'étape consistant à recevoir la valeur du premier attribut lorsque la valeur du premier attribut a expiré comprend en outre les étapes consistant à :
au temps d'une synchronisation pour le deuxième attribut, recevoir la valeur du premier attribut du premier dispositif et la valeur du deuxième attribut du premier dispositif et fournir la valeur du premier attribut en réponse à la demande,
dans lequel la réception de la valeur du premier attribut à partir du premier dispositif comprend en outre les étapes consistant à :
ajouter la demande à une file d'attente ; et
le premier dispositif recevant la demande à partir de la file d'attente lorsque le premier dispositif est disponible pour fournir la valeur du premier attribut.

2. Procédé selon la revendication 1, dans lequel si la valeur du premier attribut n'a pas expiré, alors extraire à partir de la banque de mémoire la valeur stockée du premier attribut et fournir la valeur extraite du premier attribut en réponse à la demande.

3. Procédé selon la revendication 1, dans lequel le premier dispositif a un premier état où il est incapable de fournir la valeur du premier attribut et un deuxième état où il est capable de fournir la valeur du premier attribut.

4. Procédé selon la revendication 3, dans lequel la réception de la valeur du premier attribut à partir du premier dispositif comprend en outre les étapes consistant à :
envoyer un message au premier dispositif ; et
en réponse au message, faire passer le premier dispositif du premier état au deuxième état.

5. Procédé selon la revendication 4, dans lequel le message est envoyé au premier dispositif sur un premier canal de communications et la valeur du premier attribut est reçue à partir du premier dispositif sur un deuxième canal de communications différent du premier canal de communications.

6. Procédé selon l'une quelconque des revendications 3 à 5, dans lequel le premier état est un état basse puissance et le deuxième état est un état haute puissance, le premier dispositif consommant une puissance plus élevée que dans l'état basse puissance.

7. Procédé selon l'une quelconque des revendications précédentes, dans lequel le premier attribut a un temps d'expiration ou une durée et l'étape consistant à déterminer si la valeur du premier attribut a expiré comprend la comparaison du temps d'expiration ou de la durée à une période depuis que la valeur a été synchronisée et/ou stockée dans la banque de mémoire.

8. Procédé selon la revendication 7, dans lequel le temps d'expiration ou la durée est déterminé à partir d'informations reçues avec la demande de la valeur du premier attribut.

9. Procédé selon l'une quelconque des revendications précédentes, dans lequel la demande comporte des données indiquant un temps d'expiration de la valeur demandée.

10. Procédé selon la revendication 9, dans lequel l'étape consistant à déterminer si la valeur du premier attribut a expiré comprend en outre le fait de déterminer si le temps actuel n'est pas antérieur au temps d'expiration de la valeur demandée.

11. Système comprenant :
une banque de mémoire ayant des emplacements de mémoire, dans lequel chaque emplacement de mémoire stocke des valeurs d'un ou de plusieurs attributs associés à un ou plusieurs dispositifs ;
un synchroniseur configuré pour maintenir une synchronisation des une ou plusieurs valeurs à des intervalles entre les attributs stockés dans la banque de mémoire et les attributs correspondants associés aux dispositifs, dans lequel les attributs de dispositif comprennent au moins un premier attribut, le premier attribut ayant un premier intervalle de synchronisation ; et
un gestionnaire de dispositif (30) configuré pour :
recevoir (310) une demande de la valeur du premier attribut d'un premier dispositif ; et
si la valeur stockée du premier attribut a expiré, alors recevoir (380) la valeur du premier attribut à partir du premier dispositif et fournir (390) la valeur reçue du premier attribut en réponse à la demande, dans lequel les attributs de dispositif comprennent en outre un deuxième attribut du premier dispositif, le deuxième attribut ayant un deuxième intervalle de synchronisation plus court que le premier intervalle de synchronisation, et en outre dans lequel l'étape consistant à recevoir la valeur du premier attribut lorsque la valeur du premier attribut a expiré comprend en outre les étapes consistant à :
au temps d'une synchronisation pour le deuxième attribut, recevoir la valeur du premier attribut du premier dispositif et la valeur du deuxième attribut du premier dispositif et fournir la valeur du premier attribut en réponse à la demande,
dans lequel la réception de la valeur du premier attribut à partir du premier dispositif comprend en outre les étapes consistant à :
ajouter la demande à une file d'attente ; et
le premier dispositif recevant la demande à partir de la file d'attente lorsque le premier dispositif est disponible pour fournir la valeur du premier attribut.

12. Système selon la revendication 11, dans lequel la demande comporte des données indiquant un temps d'expiration de la valeur demandée et le gestionnaire de dispositif est en outre configuré pour déterminer si la valeur du premier attribut a expiré en déterminant si le temps actuel n'est pas antérieur au temps d'expiration de la valeur demandée.

13. Programme d'ordinateur comprenant des instructions qui, lorsque le programme est exécuté par un ordinateur, amènent l'ordinateur à effectuer le procédé selon l'une quelconque des revendications 1 à 10.
